# EUROPÄISCHE PATENTSCHRIFT

(11) **EP 2 317 482 B1**
(45) Veröffentlichungstag und Bekanntmachung des Hinweises auf die Patenterteilung: **12.10.2016**
(21) Anmeldenummer: 09013698.7
(22) Anmeldetag: 30.10.2009
(51) Int. Cl.: G07F 9/00, H02J 7/00

(54) **Verkaufsautomat**
Vending machine
Automate de vente

(43) Veröffentlichungstag der Anmeldung: 04.05.2011
(73) Patentinhaber: Scholz Systemprogrammierung GmbH, 22927 Großhansdorf (DE); Hesa Innovations GmbH, 64807 Dieburg (DE)
(72) Erfinder: Weber, Willi, 64807 Dieburg (DE); Scholz, Wilhelm, 22927 Großhansdorf (DE)
(74) Vertreter: Uexküll & Stolberg

(56) Entgegenhaltungen:
- WO-A1-92/09057
- DE-A1- 3 007 047
- DE-U1-202005 008 373
- US-A1- 2006 244 415

## Beschreibung

Die vorliegende Erfindung betrifft einen Verkaufsautomaten mit einer Steuereinheit, mehreren damit verbundenen elektrischen Verbrauchern, die im Verlaufe einer Verkaufsoperation betrieben werden können, und einer Betriebsbatterie zur Versorgung der elektrischen Verbraucher mit elektrischer Energie, wobei weiter eine Ladebatterie vorgesehen ist, die über eine Ladepumpenschaltung mit der Betriebsbatterie verbindbar ist, wobei die Steuereinheit dazu vorbereitet ist, die Betriebsbatterie nach Entnahme elektrischer Energie daraus durch Verbindung mit der Ladebatterie über die Ladepumpenschaltung wieder aufzuladen.

Verkaufsautomaten werden zunehmend komplexer, zum Beispiel durch gesetzliche Auflagen, die für den Verkauf von bestimmten Produkten, zum Beispiel von Tabakprodukten, aufgestellt worden sind. Bei solchen Verkaufsautomaten muss eine Vorrichtung zum Erfassen des Alters des Benutzers vorhanden sein, die die Ausgabe des Produktes nur zulässt, wenn das vorgeschriebene Mindestalter festgestellt wird. Ein Verkaufsautomat mit einem Ausweislesegerät ist in DE 20 2008 901 618 U1 beschrieben.

Als weitere elektrische Verbraucher kommen in modernen Verkaufsautomaten Geräte zum Banknoteneinzug, elektrische Verbraucher in der Münzerkennung und Transportvorrichtungen hinzu, die ein ausgewähltes Produkt aus einem der Schächte des Verkaufsautomaten zu einem Ausgabefach transportieren.

Zur Zeit werden Verkaufsautomaten zur Außenaufstellung mit Blei-Gel-Akkumulatoren mit 7,5 Amperestunden als Betriebsbatterien verwendet. Zusätzlich werden Solarzellenfelder zum Nachladen der Betriebsbatterien verwendet, wobei die Sonneneinstrahlung allerdings sehr hoch sein muss, um eine ausreichende Ladespannung zu erreichen.

Die gegenwärtig in Verkaufsautomaten eingebauten Geräte (elektrische Verbraucher) haben unterschiedliche Spannungstiefstwerte, die für ihren Betrieb wenigstens vorhanden sein müssen. Dies kann zum Beispiel bedeuten, dass bei erniedrigtem Ladezustand der Betriebsbatterie die Steuereinheit und die Geräte zur Münzerkennung noch arbeiten und zunächst Münzgeld akzeptieren, aber wenn das Gerät zum Banknoteneinzug aktiviert wird, das einen vergleichsweise hohen Anfangsstrom aufnimmt, die Spannung der Betriebsbatterie einbrechen kann. Das hat zur Folge, dass die Steuereinheit und die weiteren elektrischen Verbraucher in dem Verkaufsautomaten einen sogenannten "Reset" durchführen, was Fehlfunktionen zur Folge hat. In der Praxis treten bei Automaten mehr als 90% der Störfälle aufgrund eines zu niedrigen Ladezustands der Betriebsbatterie bei Kunden auf und müssen dann von diesen gemeldet werden. Die durch die Kunden festgestellten Betriebsstörungen führen zu Verärgerung und Unzufriedenheit bei den Kunden.

Im Übrigen ist der Ladezustand der Betriebsbatterie bei einem Wartungsbesuch vom Wartungspersonal oft nicht eindeutig identifizierbar. Durch eine kurze Aufladung über Solarzellenfelder kann zum Beispiel ein ausreichender Ladezustand angezeigt werden, obwohl die Kapazität der Betriebsbatterie relativ niedrig ist. Im Übrigen führt der hoher Anfangsstrombedarf von einigen elektrischen Verbrauchern, zum Beispiel den Banknoteneinzuggeräten, dazu, dass eine Betriebsbatterie bereits bei einem Ladezustand von etwa 50% ausgewechselt werden müsste, da eine solche Batterie den hohen Anfangsstrombedarf des Banknoteneinzuggerätes nicht zur Verfügung stellen könnte. Das bedeutet aber, dass die Betriebsbatterie von dem Wartungspersonal schon bei einem Ladezustand, der in die Nähe von 50% kommt, die Betriebsbatterie ausgewechselt und die ausgewechselte alte Betriebsbatterie zur Neuaufladung geschickt werden muss.

Ein Verkaufsautomat mit den Merkmalen des Oberbegriffs von Patentanspruch 1 ist aus DE 20 2005 008 373 U1 bekannt. In den Verkaufsautomat ist eine Einmalbatterie eingesetzt, die über eine Ladeschaltung die wiederaufladbare Betriebsbatterie wieder aufladen kann.

Es ist Aufgabe der vorliegenden Erfindung, einen Verkaufsautomaten anzugeben, bei dem noch weniger Betriebsstörungen durch unzureichenden Ladezustand der Betriebsbatterie auftreten.

Zur Lösung dieser Aufgabe dienen die kennzeichnenden Merkmale des Patentanspruchs 1 in Verbindung mit dessen Oberbegriff. Vorteilhafte Ausführungsformen der Erfindung sind in den Unteransprüchen angegeben.

Neben der Betriebsbatterie ist eine Ladebatterie vorgesehen, die über eine Ladepumpenschaltung mit der Betriebsbatterie verbindbar ist. Die Steuereinheit ist dazu vorbereitet, die Betriebsbatterie nach Entnahme elektrische Energie daraus durch Verbindung mit der Ladebatterie über die Ladepumpenschaltung wieder aufzuladen. Erfindungsgemäß ist die Steuereinheit dazu eingerichtet, die Betriebsbatterie nach jeder Entnahme von elektrischer Energie daraus bei einem Verkaufsvorgang durch Verbindung mit der Ladebatterie über die Ladepumpenschaltung wieder aufzuladen.

Dieser Aufbau hat verschiedene Vorteile. Durch das Vorsehen einer Ladebatterie, die über eine Ladepumpenschaltung mit der Betriebsbatterie verbindbar ist, um diese nach jeder Entnahme von elektrischer Energie daraus wieder aufzuladen, kann die Ladebatterie mit relativ niedrigen Ladeströmen arbeiten, um die Betriebsbatterie über die Ladepumpenschaltung wieder aufzuladen. Dadurch kann die Ladebatterie nötigenfalls fast vollständig entladen und somit ihre Gesamtkapazität fast vollständig ausgenutzt werden.

Darüber hinaus kommt es beim Entladen der Ladebatterie und dem damit verbundenen Wiederaufladen der Betriebsbatterie bei weitgehender Entladung der Ladebatterie zu einem von dem Wartungspersonal wahrnehmbaren Entladezustand, der dann durch Austausch der fast entladenen Ladebatterie beseitigt werden kann. Selbst wenn zu diesem Zeitpunkt gerade keine Wartung stattfindet, sondern bis zur nächsten Wartung noch etwas Zeit vergeht, tritt keine Betriebsstörung des Verkaufsautomaten auf, da die Betriebsbatterie, wenn die Ladebatterie erschöpft ist, noch fast vollständig aufgeladen ist, da sie nach jeder Entnahme von elektrischer Energie wider vollständig aufgeladen wird.

Durch das Vorsehen der Ladepumpenschaltung zwischen der Ladebatterie und der Betriebsbatterie und deren Wiederaufladung nach jeder Entnahme von elektrischer Energie daraus ist es möglich, mit relativ geringen Ladeströmen eine ausreichend hohe Ladespannung zu erzeugen, um die Betriebsbatterie wieder aufzuladen. Durch die Benutzung von niedrigen Ladeströmen kann die Kapazität der Ladebatterie fast vollständig ausgenutzt werden kann, d.h. die Ladebatterie fast vollständig entladen werden. Die Ladeströme können zum Beispiel auf einen Maximalwert von etwa 150 mA begrenzt werden.

In einer vorteilhaften Ausführungsform ist neben der Betriebsbatterie parallel dazu geschaltet eine Reservebatterie vorgesehen. In diese Fall ist die Steuereinheit weiterhin dazu vorbereitet, nach Entnahme elektrischer Energie aus der Reservebatterie durch Herstellung der Verbindung zur Ladebatterie über die Ladepumpenschaltung die Reservebatterie wieder aufzuladen. Durch Vorsehen dieser Reservebatterie wird die Zeitspanne, nachdem die Ladebatterie soweit entladen ist, dass keine Aufladung der Betriebsbatterie oder Reserverbatterie mehr möglich ist, der Verkaufsautomat aber mit der Betriebsbatterie und der Reservebatterie voll betriebsfähig bleibt, erhöht, so dass mit hoher Wahrscheinlichkeit zu erwarten ist, dass der Verkaufsautomat bis zum nächsten routinemäßigen Besuch des Wartungspersonals betriebsbereit bleibt.

In einer vorteilhaften Ausführungsform ist die Steuereinheit dazu vorbereitet, den Ladezustand der Ladebatterie zu überwachen und über eine optische Anzeige ein Signal zu liefern, wenn der Ladezustand der Ladebatterie unter einem vorgegebenen Grenzwert gefallen ist. Diese Anzeige, zum Beispiel ein LED-Anzeige, sollte so angeordnet sein, dass das Wartungspersonal beim Öffnen des Verkaufsautomaten dieses Signal leicht wahrnehmen kann. Wenn die Wartungsperson das Signal sieht, wird die Ladebatterie gegen eine aufgeladene Ladebatterie ausgetauscht und die entladene alte Ladebatterie zum Wiederaufladen geschickt.

In einer vorteilhaften Ausführungsform sind Solarzellenfelder vorgesehen und ist die Steuereinheit dazu vorbereitet, bei Vorhandensein von Strömen aus den Solarzellenfeldern diese über eine Ladepumpenschaltung in die Ladebatterie einzuspeisen, um diese wieder aufzuladen beziehungsweise ihren Entladezyklus zu verlängern.

In einer vorteilhaften Ausführungsform ist die Betriebsbatterie mit den elektrischen Verbrauchern über eine Booster- oder Gleichstrom-Gleichstrom-Konverterschaltung verbunden, die eine gleichbleibende Ausgangsspannung von zum Beispiel 12,5 Volt sicherstellt.

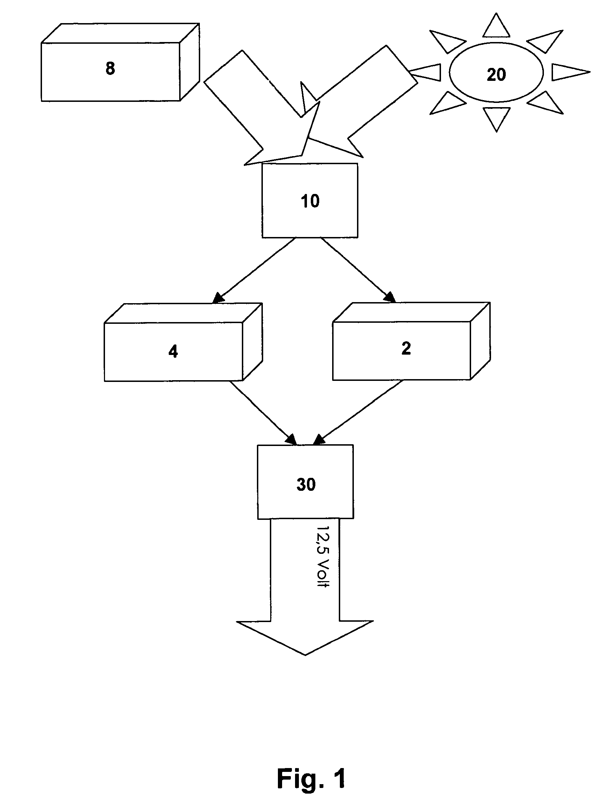

Die Erfindung wird im Folgenden anhand eines Ausführungsbeispiels in der Figur gezeigt, wobei Figur 1 ein schematisches Blockdiagramm von Komponenten der elektrischen Energieversorgung des Verkaufsautomaten ist.

In dem dargestellten Aufbau werden die elektrischen Verbraucher des Verkaufsautomaten, insbesondere Ausweislesegerät, Banknoteneinzugsgerät, Münzerkennungsgeräte und Transporteinrichtungen in dem Verkaufsautomaten, durch die Betriebsbatterie 2 über eine Booster- oder DC/DC-Konverterschaltung 10, die eine gleichbleibende Ausgangsspannung von z.B. 12,5 V liefert, mit elektrischer Energie versorgt.

Neben der Betriebsbatterie 2 ist in dem Verkaufsautomaten eine Ladebatterie 8 vorgesehen, die über eine Ladepumpenschaltung 10 mit der Betriebsbatterie 2 verbindbar ist. Daneben ist in der dargestellten bevorzugte Ausführungsform parallel zu der Betriebsbatterie 2 noch eine Reservebatterie 4 vorgesehen. Die Steuereinheit des Verkaufsautomaten ist so vorbereitet, dass sie nach jeder mit einer Verkaufsoperation verbundenen Abgabe von elektrischer Energie aus der Betriebsbatterie 2 an die elektrischen Verbraucher des Verkaufsautomaten, die Ladebatterie 8 über die Ladepumpenschaltung 10 mit der Betriebsbatterie 2 verbindet, um diese wieder aufzuladen. Dadurch kann die Betriebsbatterie 2 über einen langen Zeitraum in einem fast vollständig aufgeladenen Zustand gehalten werden. Andererseits ist es möglich, die Kapazität der Ladebatterie 8 weitgehend vollständig auszunutzen, da es ausreichend ist, aus der Ladebatterie mit relativ niedrigen Ladeströmen über die Ladepumpenschaltung 10 die erforderliche Ladespannung zu erzeugen, so dass die Kapazität der Ladebatterie 8 fast vollständig ausgenutzt werden kann. Ferner ist es bevorzugt, dass die Steuereinheit den Ladezustand der Ladebatterie 8 überwacht, und eine für das Wartungspersonal sichtbare Anzeige liefert, wenn der Ladezustand der Ladebatterie 8 einen vorgegebenen Grenzwert unterschreitet. Dadurch ist es für das Wartungspersonal möglich, den niedrigen Ladezustand der Ladebatterie bereits zu einem Zeitpunkt zu erkennen, wenn nur die Ladebatterie 8 fast erschöpft ist, während die Betriebsbatterie 2 noch fast vollständig aufgeladen ist, so dass Betriebsstörungen durch zu niedrige Ladezustände der Betriebsbatterie fast vollkommen ausgeschlossen werden können.

Ferner ist eine Solarzellenanordnung 20 an dem Verkaufsautomaten vorgesehen, die ebenfalls über die Ladepumpenschaltung 10 mit der Ladebatterie 8 und der Betriebsbatterie 2 und der Reservebatterie 4 verbunden ist. Durch die Zwischenschaltung der Ladepumpenschaltung 10 kann mit relativ geringen Strömen aus dem Solarzellenfeld 20 die erforderliche Spannung zum Wiederaufladen der Ladebatterie 8 beziehungsweise der Betriebsbatterie 2 oder der Reservebatterie durchgeführt werden.

## Patentansprüche

1. Verkaufsautomat mit einer Steuereinheit, mehreren damit verbundenen elektrischen Verbrauchern, die im Verlaufe einer Verkaufsoperation betrieben werden können, und einer Betriebsbatterie (2) zur Versorgung der elektrischen Verbraucher mit elektrischer Energie, wobei weiter eine Ladebatterie (8) vorgesehen ist, die über eine Ladepumpenschaltung (10) mit der Betriebsbatterie (2) verbindbar ist, wobei die Steuereinheit dazu vorbereitet ist, die Betriebsbatterie (2) nach Entnahme elektrischer Energie daraus durch Verbindung mit der Ladebatterie (8) über die Ladepumpenschaltung (10) wieder aufzuladen, **dadurch gekennzeichnet**, die Steuereinheit dazu vorbereitet ist, nach jeder Entnahme von elektrischer Energie aus der Betriebsbatterie (2) durch Herstellung der Verbindung zu der Ladebatterie (8) über die Ladepumpenschaltung (10) die Betriebsbatterie wieder vollständig aufzuladen.

2. Verkaufsautomat nach einem der vorhergehenden Ansprüche, **dadurch gekennzeichnet, dass** eine parallel zur Betriebsbatterie (2) geschaltete Reservebatterie (4) vorgesehen ist und dass die Steuereinheit weiterhin dazu vorbereitet ist, nach Entnahme elektrischer Energie aus der Reservebatterie durch Herstellung der Verbindung zur Ladebatterie (8) über die Ladepumpenschaltung (10) die Reservebatterie wieder aufzuladen.

3. Verkaufsautomat nach einem der vorhergehenden Ansprüche, **dadurch gekennzeichnet, dass** Solarzellenfelder (20) an dem Verkaufsautomaten vorgesehen sind und dass die Steuereinheit dazu vorbereitet ist, bei Vorhandensein von Strom aus den Solarzellenfeldern daraus über die Ladepumpenschaltung (10) eine erhöhte Spannung zu erzeugen und damit die Ladebatterie wieder aufzuladen.

4. Verkaufsautomat nach einem der vorhergehenden Ansprüche, **dadurch gekennzeichnet, dass** die Steuereinheit dazu vorbereitet ist, den Ladezustand der Ladebatterie (8) zu überwachen und über eine optische Anzeige ein Signal zu liefern, wenn der Ladezustand der Ladebatterie unter einen vorgegebenen Grenzwert gefallen ist.

5. Verkaufsautomat nach einem der vorhergehenden Ansprüche, **dadurch gekennzeichnet, dass** die Betriebsbatterie über eine Gleichstrom-Gleichstrom-Konverterschaltung (30), die eine gleichbleibende Ausgangsspannung sicherstellt, mit den elektrischen Verbrauchern verbunden ist.

## Claims

1. Vending machine comprising a control unit, a plurality of electric loads connected thereto, which electric loads can be operated in the course of a sales process, and an operation battery (2) for supplying electric power to the electric loads, wherein furthermore a charging battery (8) is provided which is connectable to the operation battery (2) via a charging pump circuit (10), wherein the control unit is arranged such that after withdrawal of electrical energy from the operation battery (2) the operation battery is charged again by connecting it to the charging battery (8) via the charging pump circuit (10), **characterized in that** the control unit is arranged such that after each withdrawal of electric energy from the operation battery (2) the operation battery is completely charged again by connecting it to the charging battery (8) via the charging pump circuit (10).

2. Vending machine according to any of the preceding claims, **characterized in that** a stand-by battery (4) is provided which is connected in parallel to the operation battery (2), and **in that** the control unit is further arranged such that after withdrawal of electric energy from the stand-by battery the stand-by battery is charged again by connecting it to the charging battery (8) via the charging pump circuit (10).

3. Vending machine according to any of the preceding claims, **characterized in that** solar cell arrays (20) are provided on the vending machine, and that the control unit is arranged to, if current from the solar cell arrays is available, generate from this current by the charging pump circuit (10) an elevated voltage and to charge the charging battery by the elevated voltage again.

4. Vending machine according to any of the preceding claims, **characterized in that** the control unit is arranged to monitor the charging state of the charging battery (8) and, if the charging state of the charging battery dropped below a predetermined threshold value to provide a signal via an optical display.

5. Vending machine according to any of the preceding claims, **characterized in that** the operation battery is connected to the electric loads via a DC-to-DC converter circuit (30) which ensures a constant output voltage.

## Revendications

1. Distributeur automatique avec une unité de commande, plusieurs consommateurs électriques reliés à celle-ci qui peuvent être actionnés au cours d'une opération de distribution, et une batterie de fonctionnement (2) pour l'alimentation des consommateurs électriques avec de l'énergie électrique, une batterie de charge (8) étant encore prévue, laquelle peut être reliée par un circuit de pompe de charge (10) à la batterie de fonctionnement (2), l'unité de commande étant préparée afin de recharger la batterie de fonctionnement (2) après le prélèvement d'énergie électrique de celle-ci par liaison avec la batterie de charge (8) par le circuit de pompe de charge (10), **caractérisé en ce que** l'unité de commande est préparée afin de recharger complètement la batterie de fonctionnement après chaque prélèvement d'énergie électrique de la batterie de fonctionnement (2) par établissement de la liaison avec la batterie de charge (8) par le biais du circuit de pompe de charge (10).

2. Distributeur automatique selon l'une quelconque des revendications précédentes, **caractérisé en ce qu'**une batterie de réserve (4) montée parallèlement à la batterie de fonctionnement (2) est prévue et **en ce que** l'unité de commande est en outre préparée afin de recharger la batterie de réserve après le prélèvement de l'énergie électrique de la batterie de réserve par établissement de la liaison avec la batterie de charge (8) par le biais du circuit de pompe de charge (10).

3. Distributeur automatique selon l'une quelconque des revendications précédentes, **caractérisé en ce que** des champs de cellules solaires (20) sont prévus sur le distributeur automatique et **en ce que** l'unité de commande est préparée afin de générer une tension accrue en présence de courant provenant des champs de cellules solaires de celle-ci par le biais du circuit de pompe de charge (10) et de recharger avec celle-ci la batterie de charge.

4. Distributeur automatique selon l'une quelconque des revendications précédentes, **caractérisé en ce que** l'unité de commande est préparée afin de surveiller l'état de charge de la batterie de charge (8) et de fournir un signal par un affichage optique lorsque l'état de charge de la batterie de charge est tombé sous une valeur limite prescrite.

5. Distributeur automatique selon l'une quelconque des revendications précédentes, **caractérisé en ce que** la batterie de fonctionnement est reliée par un circuit de conversion de courant continu-courant continu (30) qui assure une tension de départ constante à des consommateurs électriques.
